# EUROPEAN PATENT APPLICATION

(11) **EP 4 428 101 A1**
(43) Date of publication of application: **11.09.2024**
(21) Application number: 22886992.1
(22) Date of filing: 25.10.2022
(51) Int. Cl.: C01G 25/00, B01J 20/02, B01J 20/30

(54) **ZIRCONIUM HYDROXIDE POWDER AND METHOD FOR PRODUCING ZIRCONIUM HYDROXIDE POWDER**

(30) Priority: 01.11.2021 JP 2021178603
(71) Applicant: Daiichi Kigenso Kagaku Kogyo Co., Ltd., Osaka-shi, Osaka 541-0041 (JP)
(72) Inventor: NISHIKAWA,Taku, Osaka-shi, Osaka 559-0025 (JP); YAGISHITA,Sadahiro, Osaka-shi, Osaka 559-0025 (JP)
(74) Representative: Cabinet Beau de Loménie
(86) International application number: PCT/JP2022/039663
(87) International publication number: WO 2023/074665

(57) **Abstract**

A zirconium hydroxide powder having, in a pore distribution based on a BJH method, a peak top in a pore diameter region of 1 nm or more and 5 nm or less, and having a pore volume in the pore diameter region of 1 nm or more and 5 nm or less of 0.15 cm³/g or more.

## Description

### TECHNICAL FIELD

The present invention relates to a zirconium hydroxide powder and a method for producing a zirconium hydroxide powder.

### BACKGROUND ART

Conventionally, as an inorganic compound that exhibits hygroscopicity, for example, a calcium compound such as calcium oxide or calcium chloride is known. Due to the chemical properties of the calcium compound, however, when the calcium compound reacts with water, heat is generated, and the water absorbed exhibits alkalinity and is thus harmful to the human body, so that handling care is required.

Patent Document 1 discloses amorphous zirconium hydroxide having a surface area of at least 300 m²/g, a total pore volume of at least 0.70 cm³/g, and an average pore size of between 5 nm and 15 nm.

Patent Document 2 discloses zirconium hydroxide having one peak at 3300 to 3500 cm⁻¹ and two or more infrared absorption bands at 1300 to 1700 cm⁻¹ in infrared absorption spectrum measurement, showing an X-ray diffraction image belonging to a monoclinic system of zirconium oxide after heat treatment at 300 to 400°C, and having a BET specific surface area of 200 m²/g or more.

Patent Document 3 discloses a porous crystalline zirconia material which is a crystalline zirconia material composed of a tetragonal phase and a monoclinic phase and has a specific surface area of 150 to 500 m²/g. It is also disclosed that the pore volume is 0.2 to 1.2 cm³/g, and the pore diameter of pores accounting for 60% or more of the pore volume is 2 to 50 nm.

Patent Document 4 discloses zirconium oxide hydrate particles represented by the general formula ZrO₂·nH₂O, in which an average pore diameter of the particles determined by a nitrogen gas adsorption method is 1.5 nm or more and 1.75 nm or less, n in the general formula is a number exceeding 2.5, and the n is a numerical value measured after the particles are dispersed in water, filtered, and then dried in air at 60°C for 6 hours.

### PRIOR ART DOCUMENTS

### PATENT DOCUMENTS

Patent Document 1: JP-A-2009-525250
Patent Document 2: JP-A-2000-247641
Patent Document 3: JP-A-2005-35860
Patent Document 4: JP-A-2009-274897

### SUMMARY OF THE INVENTION

### PROBLEMS TO BE SOLVED BY THE INVENTION

As described above, conventionally, it has been desired to develop a compound that exhibits high hygroscopicity, has low harmfulness to the human body, and can be handled safely.

The present invention has been devised in view of the above-described problems, and an object of the present invention is to provide a zirconium hydroxide powder that exhibits high hygroscopicity, has low harmfulness to the human body, and can be handled safely. Another object of the present invention is to provide a method for producing the zirconium hydroxide powder.

### MEANS FOR SOLVING THE PROBLEMS

The present inventors have intensively studied zirconium hydroxide powders. As a result, the present inventors found that a zirconium hydroxide powder having the following configuration surprisingly exhibits high hygroscopicity, has low harmfulness to the human body, and can be handled safely, and has accomplished the present invention.

That is, the zirconium hydroxide powder according to the present invention is characterized by:
having, in a pore distribution based on a BJH method, a peak top in a pore diameter region of 1 nm or more and 5 nm or less, and
having a pore volume in the pore diameter region of 1 nm or more and 5 nm or less of 0.15 cm³/g or more.

According to the above configuration, since the zirconium hydroxide powder has a peak top in the pore diameter region of 1 nm or more and 5 nm or less, absorption of moisture in the air is promoted. Regarding this phenomenon, the present inventors infer that fine pores of 1 nm or more and 5 nm or less absorb moisture in the air by capillary phenomenon. In addition, since the pore volume in the pore diameter region of 1 nm or more and 5 nm or less is 0.15 cm³/g or more and the proportion of fine pores of 1 nm or more and 5 nm or less is large, the zirconium hydroxide powder can absorb a large amount of moisture in the air.

As described above, according to the above configuration, since there is a peak top in the pore diameter region of 1 nm or more and 5 nm or less and the pore volume in the pore diameter region of 1 nm or more and 5 nm or less is 0.15 cm³/g or more, the zirconium hydroxide powder can absorb a large amount of moisture in the air.

The amorphous zirconium hydroxide of Patent Document 1 has an average pore size between 5 nm and 15 nm, and does not have a peak top in a pore diameter region of 1 nm or more and 5 nm or less.

Although there is no explicit description, the zirconium hydroxide of Patent Document 2 may have a peak top in a pore diameter region of 1 nm or more and 5 nm or less, but has a pore volume of less than 0.15 cm³/g and does not have a sufficient pore volume.

Regarding the crystalline zirconia material of Patent Document 3, it has been disclosed that the pores accounting for 60% of the volume have a pore diameter of 2 to 50 nm, but this does not necessarily mean that pores are concentrated in a pore diameter region of 1 nm or more and 5 nm or less. That is, there is no peak top in a pore diameter region of 1 nm or more and 5 nm or less.

In addition, the average pore diameter of the zirconium oxide hydrate particles of Patent Document 4 is 1.5 nm or more and 1.75 nm or less, but the zirconium oxide hydrate particles described in Patent Document 4 contain a relatively large amount of hydrated water in the particles and there is much hydrated water in pores of 1 nm or more and 5 nm or less, so that the pore diameter region of 1 nm or more and 5 nm or less has a decreased pore volume. That is, the zirconium oxide hydrate particles of Patent Document 4 do not have a sufficient pore volume.

In addition, the compounds of Patent Documents 1 to 4 do not exhibit hygroscopicity. Furthermore, Patent Documents 1 to 4 have no description on hygroscopicity.

In the above configuration, the pore volume in the pore diameter region of 1 nm or more and 5 nm or less is preferably 0.2 cm³/g or more.

When the pore volume in the pore diameter region of 1 nm or more and 5 nm or less is 0.2 cm³/g or more, a larger amount of moisture in the atmosphere can be absorbed.

In the above configuration, the bulk density is preferably 0.10 g/cm³ or more and 0.25 g/cm³ or less.

When the bulk density is 0.25 g/cm³ or less, it can be stated that the pore volume of more than 100 nm and 1000 nm or less, which indicate particle gaps is large. As a result, agglomeration of particles is easily released, and for example, when the powder is mixed and used with another material, the powder can be highly dispersed. As a result, the zirconium hydroxide powder is easy to use for various applications. For example, when mixed with a resin material to be used as a moisture absorbent, the zirconium hydroxide powder is easily highly dispersed in the resin material.

In the above configuration, the zirconium hydroxide powder preferably has a specific surface area of 350 m²/g or more.

When the specific surface area is 350 m²/g or more, the zirconium hydroxide powder can absorb a larger amount of moisture in the air.

The method for producing the zirconium hydroxide powder according to the present invention comprises a first drying step of drying a wet cake of zirconium hydroxide prepared by a wet method until a solid concentration reaches 60% by mass or more and 87% by mass or less,
wherein a drying condition in the first drying step is a drying condition in which an increase rate of a solid concentration is within a range of 5% by mass/h or more and 120% by mass/h or less.

When a relatively mild condition, namely, the drying condition in which an increase rate of a solid concentration is within a range of 5% by mass/h or more and 120% by mass/h or less is employed as the drying condition in the first drying step, it becomes possible to easily obtain a zirconium hydroxide powder having a peak top in a pore diameter region of 1 nm or more and 5 nm or less.

Regarding this point, the present inventors infer as follows.

The zirconium hydroxide powder is composed of secondary particles in which primary particles are agglomerated.

The first drying step is an initial drying until the solid concentration of the wet cake reaches 60% by mass or more and 87% by mass or less.

When a severe condition, that is, a drying condition in which the increase rate of the solid concentration exceeds 120% by mass/h is employed as the drying condition in the first drying step, water in secondary particles of zirconium hydroxide in a wet cake state is rapidly evaporated. Therefore, the force to agglomerate is increased at once due to the surface tension, and the second particles are agglomerated to fill the portions where water existed, so that the fine pores disappear.

On the other hand, when a relatively mild condition, namely, the drying condition in which an increase rate of a solid concentration is within a range of 5% by mass/h or more and 120% by mass/h or less is employed as the drying condition in the first drying step, a weak cohesive force is generated when water in the secondary particles of zirconium hydroxide in the wet cake state evaporates, so that portions where water existed are not crushed and remain as pores. As a result, a large number of pores of 1 nm or more and 5 nm or less are formed.

In addition, by employing, as the drying condition in the first drying step, a drying condition in which the increase rate of the solid concentration is within a range of 5% by mass/h or more, it becomes easy to obtain a zirconium hydroxide powder having a peak top in a pore diameter region of 1 nm or more and 5 nm or less.

Regarding this point, the present inventors infer as follows.

When the increase rate of the solid concentration in the first drying step is less than 5% by mass/h, agglomeration of the primary particles due to hydrogen bonding easily proceeds in a process in which water in the secondary particles is evaporated to form fine pores, and as a result, fine pores disappear.

In contrast, when the increase rate of the solid concentration in the first drying step is 5% by mass/h or more, the evaporation of water proceeds faster than formation of a network of hydrogen bonding, so that agglomeration of primary particles is inhibited, and as a result, a large number of fine pores of 1 nm or more and 5 nm or less are formed.

In the above configuration, the method preferably includes a second drying step of drying the wet cake until the solid concentration of the wet cake reaches more than 87% by mass and 92% by mass or less after the first drying step.

When the second drying step is included, the final moisture amount of the zirconium hydroxide powder can be adjusted to a solid concentration of more than 87% by mass and 92% by mass or less.

### EFFECT OF THE INVENTION

The present invention can provide a zirconium hydroxide powder that exhibits high hygroscopicity, has low harmfulness to the human body, and can be handled safely. In addition, the present invention can provide a method for producing the zirconium hydroxide powder.

### BRIEF DESCRIPTION OF THE DRAWING

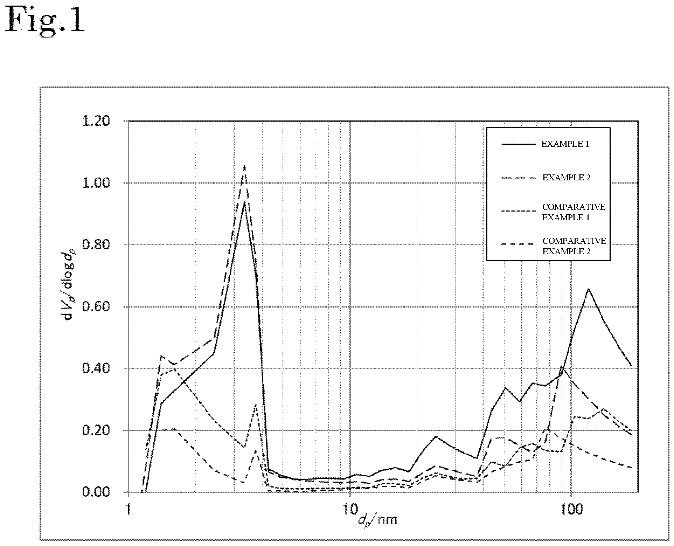

Fig. 1 is the pore distribution of the zirconium hydroxide powders of Examples and Comparative Examples.

### MODE FOR CARRYING OUT THE INVENTION

Hereinafter, embodiments of the present invention will be described. However, the present invention is not limited only to these embodiments. In the present description, zirconia is a common zirconia and contains 10% by mass or less of impurity metal compounds including hafnia (with exclusion of the case of containing WO₃).

### [Zirconium hydroxide powder]

The zirconium hydroxide powder according to the present embodiment has a peak top in a pore diameter region of 1 nm or more and 5 nm or less in a pore distribution based on a BJH method. Since the zirconium hydroxide powder has a peak top in a pore diameter region of 1 nm or more and 5 nm or less, absorption of moisture in the air is promoted. Regarding this phenomenon, the present inventors infer that fine pores of 1 nm or more and 5 nm or less absorb moisture in the air by capillary phenomenon.

The peak top is preferably present in a pore diameter region of 1.5 nm or more, more preferably present in a pore diameter region of 2.0 nm or more, still more preferably present in a pore diameter region of 3.0 nm or more, particularly preferably present in a pore diameter region of 3.2 nm or more, and especially preferably present in a pore diameter region of 3.3 nm or more. The peak top is preferably present in a pore diameter region of 4.5 nm or less, and more preferably present in a pore diameter region of 4 nm or less.

The zirconium hydroxide powder has a pore volume in the pore diameter region of 1 nm or more and 5 nm or less (hereinafter, also referred to as Vp₁₋₅) of 0.15 cm³/g or more. Since the pore volume in the pore diameter region of 1 nm or more and 5 nm or less (Vp₁₋₅) is 0.15 cm³/g or more and the proportion of fine pores of 1 nm or more and 5 nm or less is large, the zirconium hydroxide powder can absorb a large amount of moisture in the air.

The Vp₁₋₅ is preferably 0.2 cm³/g or more, more preferably 0.22 cm³/g or more, still more preferably 0.24 cm³/g or more, particularly preferably 0.25 cm³/g or more, and especially preferably 0.26 cm³/g or more, and extremely preferably 0.27 cm³/g or more. The Vp₁₋₅ is preferably as large as possible, and is, for example, 0.8 cm³/g or less, 0.6 cm³/g or less, 0.4 cm³/g or less, or the like.

As described above, since the zirconium hydroxide powder has a peak top in a pore diameter region of 1 nm or more and 5 nm or less and has a pore volume of 0.15 cm³/g or more in the pore diameter region of 1 nm or more and 5 nm or less, the zirconium hydroxide powder can absorb a large amount of moisture in the air.

In the zirconium hydroxide powder, a ratio (Vp₁₋₅/Vp₁₋₅₀) of a pore volume in a pore diameter region of 1 nm or more and 5 nm or less (Vp₁₋₅) to a pore volume in a pore diameter region of 1 nm or more and 50 nm or less (hereinafter, also referred to as Vp₁₋₅₀) is preferably 0.5 or more.

When the ratio (Vp₁₋₅/Vp₁₋₅₀) is 0.5 or more and the pore volume in the pore diameter region of 1 nm or more and 5 nm or less is 0.15 cm³/g or more, the zirconium hydroxide powder can absorb a larger amount of moisture in the air.

The ratio (Vp₁₋₅/Vp₁₋₅₀) is more preferably 0.6 or more, still more preferably 0.65 or more, and particularly preferably 0.7 or more. The ratio (Vp₁₋₅/Vp₁₋₅₀) is preferably as large as possible, and is, for example, 1.0 or less, 0.9 or less, or the like.

The Vp₁₋₅₀ is preferably 0.2 cm³/g or more, more preferably 0.25 cm³/g or more, still more preferably 0.3 cm³/g or more, particularly preferably 0.32 cm³/g or more, and especially preferably 0.34 cm³/g or more. The Vp₁₋₅₀ is preferably 1.0 cm³/g or less, more preferably 0.8 cm³/g or less, and particularly preferably 0.6 cm³/g or less.

In the zirconium hydroxide powder preferably has a pore volume of the entire pore diameter region (hereinafter, also referred to as Vpₐₗₗ) of 0.3 cm³/g or more, and more preferably 0.4 cm³/g or more. The Vpₐₗₗ is preferably 1.2 cm³/g or less, and more preferably 1.0 cm³/g or less.

The zirconium hydroxide powder preferably has an average pore diameter of 3 nm or more and 6 nm or less. When the average pore diameter is 3 nm or more and 6 nm or less, the zirconium hydroxide powder can absorb a larger amount of moisture in the air.

The average pore diameter is preferably 3.3 nm or more, more preferably 3.6 nm or more, still more preferably 3.9 nm or more, particularly preferably 4.0 nm or more, especially preferably 4.04 nm or more, and extremely preferably 4.2 nm or more. The average pore diameter is preferably 5.5 nm or less, and more preferably 5 nm or less.

The peak top, the Vp₁₋₅, the Vp₁₋₅₀, the Vpₐₗₗ, and the average pore diameter refer to values obtained by the methods described in EXAMPLES.

The zirconium hydroxide powder preferably has a bulk density of 0.10 g/cm³ or more and 0.25 g/cm³ or less. When the bulk density is 0.25 g/cm³ or less, it can be stated that the pore volume of more than 100 nm and 1000 nm or less, which indicate particle gaps is large. As a result, agglomeration of particles is easily released, and for example, when the powder is mixed and used with another material, the powder can be highly dispersed. As a result, the zirconium hydroxide powder is easy to use for various applications. For example, when mixed with a resin material to be used as a moisture absorbent, the zirconium hydroxide powder is easily highly dispersed in the resin material.

The bulk density is more preferably 0.23 g/cm³ or less, still more preferably 0.21 g/cm³ or less, and particularly preferably 0.19 g/cm³ or less. The bulk density is preferably as small as possible, and is, for example, 0.12 g/cm³ or more, 0.14 g/cm³ or more, 0.16 g/cm³ or more, or the like.

The bulk density refers to a value obtained by the method described in EXAMPLES.

The zirconium hydroxide powder preferably has a specific surface area of 350 m²/g or more. When the specific surface area is 350 m²/g or more, the zirconium hydroxide powder can absorb a larger amount of moisture in the air.

The specific surface area is more preferably 360 m²/g or more, still more preferably 370 m²/g or more, and particularly preferably 380 m²/g or more. The specific surface area is preferably as large as possible, and is, for example, 500 m²/g or less, 450 m²/g or less, or the like.

The specific surface area refers to a value obtained by the method described in EXAMPLES.

The zirconium hydroxide powder preferably has a water absorption rate determined by the following method for measuring a water absorption rate of 20% or more. When the water absorption rate is 20% or more, it can be stated that the zirconium hydroxide powder has a sufficient water absorption function.

The zirconium hydroxide powder generates no heat during water absorption. In the present description, the phrase "generate no heat during water absorption" means that the temperature rise when 10 g of zirconium hydroxide powder is added to 100 g of water at room temperature (25°C) is 1°C or less.

### <Method for measuring water absorption rate>

1. The weight of the zirconium hydroxide powder is measured.
2. The weighed zirconium hydroxide powder is exposed to an atmosphere having a temperature of 45°C and a humidity of 80% for 2 hours.
3. The water absorption rate is determined by the following formula (1).
[Water absorption rate (%)] = [[(weight of zirconium hydroxide powder after exposure) - (weight of zirconium hydroxide powder before exposure)]/(weight of zirconium hydroxide powder before exposure)] × 100

The water absorption rate is preferably 23% or more, and more preferably 25% or more. The water absorption rate is preferably as high as possible, and is, for example, 50% or less, 40% or less, or the like.

Zirconium hydroxide is a compound represented by the general formula ZrO(OH)₂·nH₂O (n > 0). Hydrous zirconium oxide is a compound represented by the general formula ZrO₂·nH₂O (n > 0). The zirconium hydroxide powder according to the present embodiment contains both a powder of zirconium hydroxide and a powder of hydrous zirconium oxide.

n is preferably 2 or less, and more preferably 1.5 or less. When n is 2 or less, the zirconium hydroxide powder is superior in that the moisture content is small and the hygroscopicity is higher. In addition, since the moisture content is small, the zirconium hydroxide powder is superior in handleability. The value of n can be adjusted by, for example, the temperature or time of the second drying step described later.

The zirconium hydroxide powder is preferably amorphous. When the zirconium hydroxide powder is amorphous, the number of hydroxyl groups present on the surface of the powder particles is larger as compared with the case of being crystalline. Therefore, moisture is easily adsorbed to the hydroxyl groups. As a result, when the zirconium hydroxide powder is amorphous, the zirconium hydroxide powder is further superior in hygroscopicity.

Whether a zirconium hydroxide powder is crystalline or amorphous is determined by powder X-ray diffraction measurement. When the zirconium hydroxide powder is crystalline, a clear diffraction peak is confirmed in the range of 2θ = 28° to 31°, but when the zirconium hydroxide powder is amorphous, the peak in the range is broad, and the crystallite diameter calculated from the half width is 3 nm or less.

The use of the zirconium hydroxide powder is not particularly limited, and for example, the zirconium hydroxide powder can be used alone or in combination with another material as a moisture absorbent.

### [Method for producing zirconium hydroxide powder]

Hereinafter, one example of a method for producing a zirconium hydroxide powder is described. However, the method for producing the zirconium hydroxide powder of the present invention is not limited to the following exemplification.

The method for producing the zirconium hydroxide powder according to the present embodiment comprises a first drying step of drying a wet cake of zirconium hydroxide prepared by a wet method until a solid concentration reaches 60% by mass or more and 87% by mass or less,
wherein a drying condition in the first drying step is a drying condition in which an increase rate of a solid concentration is within a range of 5% by mass/h or more and 120% by mass/h or less.

### <First drying step>

In the method for producing the zirconium hydroxide powder according to the present embodiment, first, a wet cake of zirconium hydroxide prepared by a wet method is dried until the solid concentration reaches 60% by mass or more and 87% by mass or less (first drying step).

The drying condition in the first drying step is a drying condition in which the increase rate of the solid concentration is within a range of 5% by mass/h or more and 120% by mass/h or less.

The increase rate of the solid concentration refers to a value obtained by the following formula (2). [Increase rate of solid concentration (% by mass/h)] = [[solid concentration (% by mass) of zirconium hydroxide powder after first drying] - [solid concentration (% by mass) of zirconium hydroxide powder before drying]]/[drying time(h)]

When a relatively mild condition, namely, the drying condition in which an increase rate of a solid concentration is within a range of 5% by mass/h or more and 120% by mass/h or less is employed as the drying condition in the first drying step, a weak cohesive force is generated when water in the secondary particles of zirconium hydroxide in the wet cake state evaporates, so that portions where water existed are not crushed and remain as pores. As a result, a large number of pores of 1 nm or more and 5 nm or less are formed.

The drying condition in the first drying step can be adjusted by appropriately selecting a drying method or a drying temperature.

The drying temperature in the first drying step is preferably 360°C or lower, and more preferably 350°C or lower. When the drying temperature is set to 360°C or lower, the increase rate of the solid concentration can be prevented from exceeding 120% by mass/h. When the drying temperature is 360°C or lower, the zirconium hydroxide powder to be obtained is easily made amorphous. When the drying temperature is excessively high, the obtained zirconium hydroxide powder to be obtained is prone to be crystalline. The drying temperature in the first drying step is preferably 150°C or higher, and more preferably 200°C or higher from the viewpoint of productivity.

Examples of the drying method include a method using a shelf type dryer and a method using an airflow type dryer. When a shelf type dryer is used, the drying speed is to be slower than when an airflow type dryer is used, and thus the drying speed is easily adjusted such that the increase rate of the solid concentration does not exceed 120% by mass/h. In addition, when the airflow type dryer is used, the drying speed is to be faster than that in the case where the shelf type dryer is used, so that the productivity can be maintained high even if the drying temperature is lowered.

As described above, the first drying step is a step of drying a wet cake of zirconium hydroxide prepared by a wet method until the solid concentration reaches 60% by mass or more and 87% by mass or less, and the drying condition in the first drying step is a drying condition in which the increase rate of the solid concentration is within a range of 5% by mass/h or more and 120% by mass/h or less. As the drying condition in the first drying step, the increase rate of the solid concentration is preferably 10% by mass/h or more and 100% by mass/h or less, more preferably 20% by mass/h or more and 90% by mass/h or less, still more preferably 30% by mass/h or more and 90% by mass/h or less, particularly preferably 40% by mass/h or more and 80% by mass/h or less, and especially preferably 60% by mass/h or more and 75% by mass/h or less.

Pores of 1 nm or more and 5 nm or less can be formed through adequately adjusting the drying conditions in a state where the solid concentration is low. That is, pores of 1 nm or more and 5 nm or less are suitably formed by adequately adjusting the drying condition until the solid concentration becomes 60% by mass or more and 87% by mass or less.

The first drying step is preferably drying until the solid concentration of the wet cake reaches 60% by mass or more, and more preferably drying until the solid concentration of the wet cake reaches 65% by mass or more. The first drying step is preferably drying until the solid concentration of the wet cake becomes 87% by mass or less, and more preferably drying until the solid concentration of the wet cake becomes 85% by mass or less.

The starting material for producing the wet cake of zirconium hydroxide is not particularly limited, but it is preferable to use basic zirconium sulfate as the starting material because it becomes easy to control the agglomeration form of particles. The wet cake of zirconium hydroxide can be obtained by using basic zirconium sulfate as a starting material and adding a base.

The basic zirconium sulfate can be obtained by hydrolyzing an aqueous solution of a soluble zirconium salt.

The soluble zirconium salt may be any zirconium salt soluble in water without any particular limitation, and one obtained by a known production method or a commercially available product can also be used. For example, nitrates such as zirconium oxynitrate, chlorides such as zirconium chloride and zirconium oxychloride, and acetates such as zirconium acetate can be used. Among them, zirconium oxychloride is preferable.

The concentration of the aqueous solution of the soluble zirconium salt may be appropriately set according to the type (solubility) of the soluble zirconium salt to be used and the like, and may be set to about 10 to 200 g, preferably 50 to 100 g in terms of zirconium oxide in 1 liter of the aqueous solution.

As a hydrolyzing agent, for example, an inorganic acid such as sulfuric acid or an inorganic acid salt such as ammonium sulfate or aluminum sulfate can be used. The amount of the hydrolyzing agent to be added may be appropriately changed depending on the type of the hydrolyzing agent to be used, the type of the aqueous solution, and the like, but in general, the amount of the hydrolyzing agent may be an amount sufficient to react with all the soluble zirconium salt in the aqueous solution to produce a slurry, and the hydrolyzing agent may be added in an excess amount over the stoichiometric amount. The hydrolyzing agent may remain as long as the specific surface area of the zirconium hydroxide is not significantly reduced.

The type of the base is not particularly limited, and for example, sodium hydroxide, potassium hydroxide, ammonia, sodium carbonate, or ammonium carbonate can be used. The amount of the base to be added is not particularly limited as long as a hydroxide can be generated, but it may be usually adjusted such that the slurry pH is 9 or more, and preferably 12.5 or more.

### <Second drying step>

After the first drying step, it is preferable to dry the wet cake until the solid concentration of the wet cake reaches more than 87% by mass and 92% by mass or less (second drying step). By performing the second drying step, the final moisture amount of the zirconium hydroxide powder can be adjusted to a solid concentration of more than 87% by mass and 92% by mass or less. By adjusting the solid concentration to more than 87% by mass and 92% by mass or less, it is possible to reduce the amount of crystal water contained in the zirconium hydroxide powder, and it is possible to form a zirconium hydroxide powder having a less moisture content and higher hygroscopicity.

The drying condition in the second drying step is not particularly limited as long as the final moisture content of the zirconium hydroxide powder can be adjusted to a solid concentration of more than 87% by mass and 92% by mass or less.

The drying temperature in the second drying step is preferably 200°C or lower, and more preferably 150°C or lower. When the drying temperature is 200°C or lower, the zirconium hydroxide powder to be obtained is easily made amorphous. When the drying temperature is excessively high, the obtained zirconium hydroxide powder to be obtained is prone to be crystalline. The drying temperature in the second drying step is preferably 100°C or higher, and more preferably 110°C or higher from the viewpoint of productivity.

Examples of the drying method include a method using a shelf type dryer and a method using an airflow type dryer.

The method for producing the zirconium hydroxide powder according to the present embodiment has been described above.

### EXAMPLES

Hereinafter, the present invention will be described in detail with reference to Examples, but the present invention is not limited to the following Examples as long as the following descriptions do not depart from the gist of the present invention. A zirconium hydroxide powder obtained in each of Examples and Comparative Examples contains 1.3 to 2.5% by mass of hafnium oxide as an unavoidable impurity with respect to zirconium oxide (calculated from the following formula (X)). ([Mass of hafnium oxide]/([mass of zirconium oxide] + [mass of hafnium oxide])) × 100 (%)

The maximum value and the minimum value of the content of each component shown in the following Examples should be considered as a preferable minimum value and a preferable maximum value of the present invention regardless of the content of other components.

In addition, the maximum value and the minimum value of the measured values shown in the following Examples should be considered to be the preferred minimum value and maximum value of the present invention regardless of the content (composition) of each component.

### [Preparation of zirconium hydroxide powder]

### (Example 1)

Basic zirconium sulfate (containing 1 kg of zirconium oxide) was dispersed in 10 kg of pure water to afford a basic zirconium sulfate slurry. To the slurry was added 25% by mass aqueous solution of sodium hydroxide until the pH of the slurry reached 13.5, affording a precipitate. Then, the generated precipitate was subjected to solid-liquid separation and washed with water, and a wet cake of zirconium hydroxide was collected. The solid concentration in the wet cake was 31.9% by mass.

Next, the wet cake obtained was dried at 350°C for 0.5 hours using a shelf dryer, affording a powder of zirconium hydroxide having a solid concentration of 68.5% by mass. This drying corresponds to the first drying step in the present invention. The increase rate of a solid concentration in the first drying step was 73.2% by mass/h.

Next, the zirconium hydroxide powder was dried at 120°C to a constant weight using a shelf dryer, affording a zirconium hydroxide powder according to the present example. This drying corresponds to the second drying step in the present invention. The zirconium hydroxide powder obtained had a solid concentration of 89.1% by mass.

The zirconium hydroxide powder obtained had a chemical formula of ZrO₂·0.45H₂O, and was amorphous.

The chemical formula of the resulting zirconium hydroxide powder was specified by the weight loss ratio from room temperature to 200°C in thermogravimetry. Powder X-ray diffraction measurement confirmed that the resulting zirconium hydroxide powder was amorphous.

### (Example 2)

A wet cake of zirconium hydroxide was obtained in the same manner as in Example 1.

Next, the wet cake obtained was dried at 200°C for 2 hours using a shelf dryer, affording a zirconium hydroxide powder having a solid concentration of 72.5% by mass. This drying corresponds to the first drying step in the present invention. The increase rate of a solid concentration in the first drying step was 20.3% by mass/h.

Next, the zirconium hydroxide powder was dried at 120°C to a constant weight using a shelf dryer, affording a zirconium hydroxide powder according to the present example. This drying corresponds to the second drying step in the present invention. The zirconium hydroxide powder obtained had a solid concentration of 89.5% by mass.

The zirconium hydroxide powder obtained had a chemical formula of ZrO₂·0.44H₂O, and was amorphous.

### (Example 3)

A wet cake of zirconium hydroxide was obtained in the same manner as in Example 1 except that the base in Example 1 was changed from a 25% by mass aqueous solution of sodium hydroxide to a 25% by mass aqueous solution of ammonia. The solid concentration in the wet cake was 29.3% by mass. Next, the wet cake obtained was dried at 250°C for 1.2 hours using a shelf dryer, affording a zirconium hydroxide powder having a solid concentration of 73.4% by mass. This drying corresponds to the first drying step in the present invention. The increase rate of a solid concentration in the first drying step was 36.8% by mass/h.

Next, the zirconium hydroxide powder was dried at 160°C to a constant weight using a shelf dryer, affording a zirconium hydroxide powder according to the present example. This drying corresponds to the second drying step in the present invention. The zirconium hydroxide powder obtained had a solid concentration of 91.4% by mass.

The zirconium hydroxide powder obtained had a chemical formula of ZrO₂·0.42H₂O, and was amorphous.

### (Example 4)

A wet cake of zirconium hydroxide was obtained in the same manner as in Example 1 except that the base in Example 1 was changed from a 25% by mass aqueous solution of sodium hydroxide to a 25% by mass aqueous solution of potassium hydroxide. The solid concentration in the wet cake was 29.8% by mass. Next, the wet cake obtained was dried at 250°C for 1.2 hours using a shelf dryer, affording a zirconium hydroxide powder having a solid concentration of 71.5% by mass. This drying corresponds to the first drying step in the present invention. The increase rate of a solid concentration in the first drying step was 34.8% by mass/h.

Next, the zirconium hydroxide powder was dried at 140°C to a constant weight using a shelf dryer, affording a zirconium hydroxide powder according to the present example. This drying corresponds to the second drying step in the present invention. The zirconium hydroxide powder obtained had a solid concentration of 90.4% by mass.

The zirconium hydroxide powder obtained had a chemical formula of ZrO₂·0.43H₂O, and was amorphous.

### (Comparative Example 1)

A wet cake of zirconium hydroxide was obtained in the same manner as in Example 1.

Next, the wet cake obtained was dried at 300°C for 0.3 hours using an airflow type dryer, affording a zirconium hydroxide powder having a solid concentration of 72.8% by mass. The increase rate of a solid concentration in this drying step was 136.3% by mass/h.

Next, the zirconium hydroxide powder was dried at 120°C to a constant weight using a shelf dryer, affording a zirconium hydroxide powder according to the present comparative example. The zirconium hydroxide powder obtained had a solid concentration of 89.0% by mass.

The zirconium hydroxide powder obtained had a chemical formula of ZrO₂·0.42H₂O, and was amorphous.

### (Comparative Example 2)

A wet cake of zirconium hydroxide was obtained in the same manner as in Example 1.

Next, the wet cake obtained was dried at 350°C for 0.18 hours using an airflow type dryer, affording a zirconium hydroxide powder having a solid concentration of 86.6% by mass. The increase rate of a solid concentration in this drying step was 298.4% by mass/h.

Next, the zirconium hydroxide powder was dried at 120°C to a constant weight using a shelf dryer, affording a zirconium hydroxide powder according to the present comparative example. The zirconium hydroxide powder obtained had a solid concentration of 89.8% by mass.

The zirconium hydroxide powder obtained had a chemical formula of ZrO₂·0.41H₂O, and was amorphous.

### [Measurement of solid concentration]

The weight of the zirconium hydroxide powder of each of Examples and Comparative Examples was measured. The weighed zirconium hydroxide powder was fired at 1000°C for 1 hour, and then the solid concentration was determined by the following formula (3). [Solid concentration (%)] = [(weight of zirconium hydroxide powder after firing)/(weight of zirconium hydroxide powder before firing)] × 100

### [Measurement of pore volume]

For the zirconium hydroxide powders of Examples and Comparative Examples, a pore distribution was obtained by a BJH method using a measuring apparatus "BELSORP mini II (manufactured by Microtrac BEL)". Fig. 1 shows the pore distributions of the zirconium hydroxide powders of Examples and Comparative Examples.

Using the obtained pore distribution, the pore diameter at the peak top of the log differential pore volume, the pore volume in the pore diameter region of 1 nm or more and 5 nm or less (Vp₁₋₅), the pore volume in the pore diameter region of 1 nm or more and 50 nm or less (Vp₁₋₅₀), the pore volume in the entire pore diameter region (Vpₐₗₗ), and the average pore diameter were determined. In addition, the ratio (Vp₁₋₅/Vp₁₋₅₀) was calculated. The results are shown in Table 1.

### [Measurement of bulk density]

For the zirconium hydroxide powders of Examples and Comparative Examples, the bulk density of a zirconium hydroxide powder was determined from the weight of the zirconium hydroxide powder filled in a volume of 30 ml according to JIS K 5101. The results are shown in Table 1.

### [Measurement of specific surface area]

The specific surface area of the zirconium hydroxide powders of Examples and Comparative Examples was measured by the BET method using a specific surface area meter ("Macsorb" manufactured by Mountec). The results are shown in Table 1.

### [Measurement of water absorption rate]

The weight of the zirconium hydroxide powder of each of Examples and Comparative Examples was measured. Next, the weighed zirconium hydroxide powder was exposed to an atmosphere having a temperature of 45°C and a humidity of 80% for 2 hours using a thermo-hygrostat. Thereafter, the water absorption rate was determined by the following formula (1). The results are shown in Table 1. [Water absorption rate (%)] = [[(weight of zirconium hydroxide powder after exposure) - (weight of zirconium hydroxide powder before exposure)]/(weight of zirconium hydroxide powder before exposure)] × 100

**[Table 1]**

| | Example 1 | Example 2 | Example 3 | Example 4 | Comparative Example 1 | Comparative Example 2 |
|---|---|---|---|---|---|---|
| Dryer in first drying step | Shelf type dryer | Shelf type dryer | Shelf type dryer | Shelf type dryer | Airflow type dryer | Airflow type dryer |
| Drying temperature (°C) in first drying step | 350 | 200 | 250 | 250 | 300 | 350 |
| Solid concentration (a by mass) after first drying step | 68.5 | 72.5 | 73.4 | 71.5 | 72.8 | 86.6 |
| Drying time (h) in first drying step | 0.5 | 2 | 1.2 | 1.2 | 0.3 | 0.18 |
| Increase rate (a by mass/h) of solid concentration in first drying step | 73.2 | 20.3 | 36.8 | 34.8 | 136.3 | 298.4 |
| Dryer in second drying step | Shelf type dryer | Shelf type dryer | Shelf type dryer | Shelf type dryer | Shelf type dryer | Shelf type dryer |
| Drying temperature (°C) in second drying step | 120 | 120 | 160 | 140 | 120 | 120 |
| Solid concentration (a by mass) after second drying step | 89.1 | 89.5 | 91.4 | 90.4 | 89.0 | 89.8 |
| Pore diameter (nm) at peak top in pore distribution | 3.3 | 3.3 | 3.3 | 4.9 | 1.6 | 1.6 |
| Pore volume Vp₁₋₅ (cm³/g) in pore diameter region of 1 to 5 nm | 0.27 | 0.28 | 0.20 | 0.23 | 0.14 | 0. 06 |
| Pore volume Vp₁₋₅₀ (cm³/g) in pore diameter region of 1 to 50 nm | 0.38 | 0.34 | 0.30 | 0.32 | 0.18 | 0. 08 |
| Total pore volume Vpₐₗₗ (cm³/g) | 0.61 | 0.47 | 0.33 | 0.45 | 0.28 | 0.15 |
| Vp₁₋₅/Vp₁₋₅₀ | 0.71 | 0.82 | 0.65 | 0.72 | 0.78 | 0.75 |
| Vp₁₋₅/Vp all | 0.44 | 0.60 | 0.59 | 0.51 | 0.50 | 0.40 |
| Average pore diameter (nm) | 4.98 | 4.04 | 3.68 | 5.07 | 3.28 | 3.40 |
| Bulk density (g/cm³) | 0.17 | 0.19 | 0.24 | 0.23 | 0.26 | 0.34 |
| Specific surface area (m²/g) | 387.5 | 384.4 | 359.4 | 364.9 | 267.1 | 168.6 |
| Water absorption rate (%) | 25.4 | 29.2 | 22.7 | 23.5 | 12.4 | 10.1 |

## Claims

1. A zirconium hydroxide powder having, in a pore distribution based on a BJH method, a peak top in a pore diameter region of 1 nm or more and 5 nm or less, and
having a pore volume in the pore diameter region of 1 nm or more and 5 nm or less of 0.15 cm³/g or more.

2. The zirconium hydroxide powder according to claim 1, wherein the pore volume in the pore diameter region of 1 nm or more and 5 nm or less is 0.2 cm³/g or more.

3. The zirconium hydroxide powder according to claim 1 or 2, having a bulk density of 0.10 g/cm³ or more and 0.25 g/cm³ or less.

4. The zirconium hydroxide powder according to any one of claims 1 to 3, having a specific surface area of 350 m²/g or more.

5. A method for producing the zirconium hydroxide powder according to any one of claims 1 to 4, the method comprising
a first drying step of drying a wet cake of zirconium hydroxide prepared by a wet method until a solid concentration reaches 60% by mass or more and 87% by mass or less,
wherein a drying condition in the first drying step is a drying condition in which an increase rate of a solid concentration is within a range of 5% by mass/h or more and 120% by mass/h or less.

6. The method for producing a zirconium hydroxide powder according to claim 5, comprising a second drying step of drying the wet cake until the solid concentration of the wet cake reaches more than 87% by mass and 92% by mass or less after the first drying step.
